(19) Europäisches Patentamt
European Patent Office
Office européen des brevets

(11) **EP 1 601 929 B1**

(12) **FASCICULE DE BREVET EUROPEEN**

(45) Date de publication et mention
de la délivrance du brevet:
**18.01.2012 Bulletin 2012/03**

(51) Int Cl.:
*F41G 3/22* (2006.01)   *G01B 7/00* (2006.01)
*G01D 5/20* (2006.01)

(21) Numéro de dépôt: **02801164.1**

(22) Date de dépôt: **20.12.2002**

(86) Numéro de dépôt international:
**PCT/FR2002/004507**

(87) Numéro de publication internationale:
**WO 2004/065896 (05.08.2004 Gazette 2004/32)**

(54) **PROCEDE ET DISPOSITIF DE MESURE MAGNETIQUE DE LA POSITION ET DE L'ORIENTATION D'UN OBJET MOBILE PAR RAPPORT A UNE STRUCTURE FIXE**

VERFAHREN UND VORRICHTUNG ZUR MAGNETISCHEN MESSUNG DER LAGE UND ORIENTIERUNG EINES, RELATIV ZU EINER FESTSTEHENDEN STRUKTUR, BEWEGBAREN OBJEKTS

METHOD AND DEVICE FOR MAGNETIC MEASUREMENT OF THE POSITION AND ORIENTATION OF A MOBILE OBJECT RELATIVE TO A FIXED STRUCTURE

(84) Etats contractants désignés:
**DE FR GB**

(43) Date de publication de la demande:
**07.12.2005 Bulletin 2005/49**

(73) Titulaire: **Thales**
**92200 Neuilly Sur Seine (FR)**

(72) Inventeur: **LESCOURRET,Jean-Louis**
**Thales Intellectual Property**
**91117 Arcueil cedex (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 014 061     WO-A-01/79778**
**US-A- 5 646 525     US-A- 5 857 777**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à la mesure précise de champs magnétiques et plus particulièrement à la détermination de la position et de l'orientation d'un objet mobile par rapport à une structure fixe.

Notamment, l'invention concerne la détermination de la posture du casque d'un pilote d'aéronefs militaires, dans lesquels la position angulaire d'une cible est déterminée par la visée, au travers d'un système comprenant le visuel de casque du pilote.

Le fonctionnement d'un tel système est rappelé brièvement ci-après : par un dispositif collimateur annexe, le pilote voit, à travers sa visière semi-réfléchissante solidaire du casque, sur l'axe de vision, l'image d'un réticule projeté à l'infini en superposition avec la scène extérieure. Lorsqu'il veut désigner une cible, le pilote amène ce réticule à coïncider avec la cible et signale que la coïncidence est réalisée, au moyen par exemple d'une commande par bouton-poussoir, prévue à cet effet.

A condition de repérer, au moment de la signalisation de la coïncidence, la position angulaire exacte du casque, il est possible de déterminer, par rapport à l'avion, la direction de visée et de désigner l'objectif à un système d'arme, ou de pointer dans cette direction un système optique par exemple.

Un dispositif de mesure d'orientation et de position du casque du pilote dans un repère lié à l'aéronef peut consister en un capteur d'orientation et de position constitué de trois bobines électromagnétiques orthogonales et placé sur le casque, et en un émetteur, situé en un point fixe de la cabine, et constitué de trois autres bobines électromagnétiques.

Le procédé consiste alors à faire passer, dans chaque bobine de l'émetteur (formant un trièdre sensiblement orthogonal fixe), un courant électrique. Ces courants font apparaître trois champs magnétiques qui sont captés par les bobines du capteur (formant un trièdre mobile sensiblement orthogonal lié au casque). L'analyse de ces champs magnétiques permet de déterminer la position et l'orientation du trièdre mobile par rapport au trièdre fixe.

Dans ce domaine d'application notamment il est impératif d'obtenir une mesure précise des champs magnétiques émis par l'émetteur fixe, et détectés par le capteur lié au casque, de manière à désigner avec précision, à un système d'arme, l'objectif sélectionné par le pilote.

Jusqu'à présent, on utilisait pour cette mesure des composants de grande précision, parfois thermostatés, pouvant fonctionner dans une large durée temporelle.

Un inconvénient de cette technique de l'art antérieur est que, même avec des composants de grande qualité et donc de complexité et de coût très élevés, il est difficile d'atteindre la très grande précision que nécessite ce domaine d'application.

Un autre inconvénient de cette technique de l'art antérieur est que, même avec des composants de grande qualité et de coût très élevé, il est difficile de maintenir un niveau de précision élevé dans le temps, à cause du vieillissement des composants.

Des techniques de calibration ont été proposées, pour limiter ces inconvénients. Toutefois, les phases de calibration supposent, selon ces techniques, l'interruption temporaire de l'émission, et donc du fonctionnement du capteur. Cette interruption n'est pas acceptable dans de nombreuses situations (diminution du rapport signal à bruit), et notamment dans le cas discuté ci-dessus d'équipements militaires, où le rapport signal à bruit doit être optimisé impérativement pour ainsi obtenir la précision maximale.

La demanderesse a imaginé une technique de calibration beaucoup plus avantageuse grâce à laquelle la mesure de champ magnétique peut fonctionner de manière continue et ne nécessite pas de phase préliminaire et/ou périodique de calibration pendant laquelle la mesure serait interrompue.

Dans un dispositif de mesure de champ magnétique comprenant au moins une chaîne d'acquisition de mesure, on prévoit selon cette technique de mettre en oeuvre des signaux de calibration qui se superposent aux signaux à mesurer et qui présentent des composantes spectrales à des fréquences distinctes de celles des signaux utiles. On peut ainsi facilement calculer une estimation d'une grandeur électrique représentative de la chaîne de mesure, à partir des paramètres de calibration, sans interruption de la mesure, de manière à éliminer les incertitudes de mesure et/ou la dépendance de la mesure à des paramètres lentement variables, connus avec une précision insuffisante ou inconnus, comme par exemple les résistances de mesure de courant et les fonctions de transfert de chaînes de mesure. On choisit de préférence, comme grandeur électrique représentative, la fonction de transfert ou la tension de sortie de calibration de la chaîne.

Cependant, cette technique ne prend en compte que la calibration des chaînes d'acquisition de mesure mais pas la calibration des fonctions de transfert des voies du capteur.

La demande PCT WO-A-01 :79778 dont le déposant est la demanderesse propose une autre solution technique. Le dispositif et le procédé revendiqués comportent des moyens d'évaluation des champs perturbateurs produits par l'environnement par la mesure de la somme vectorielle des champs émis et des champs perturbateurs. Cette solution est cependant silencieuse sur le problème de la calibration.

L'invention a donc pour objet un procédé et un dispositif de mesure magnétique mettant en oeuvre une calibration complète permettant de connaître avec précision l'amplitude complexe des champs magnétiques à mesurer.

De manière générale, si l'on désigne par $[\vec{B}_c(j\omega)]$ les champs résultant dans le repère capteur des champs émis par l'émetteur, les mesures en sortie des voies du capteur peuvent s'écrire :

$$\left[\vec{M}(j\omega)\right] = T(j\omega)\left[\vec{B}_c(j\omega)\right]$$

où $\omega$ représente en fait un ensemble de termes fréquentiels distincts entre eux et multiples entiers d'un terme $\omega_0 = \dfrac{2\pi}{T_{obs}}$ (avec $T_{obs}$ durée d'un cycle de mesure), respectivement émis par les voies d'émission et où $T(j\omega)$ est une matrice dont les termes représentent les fonctions de transfert entre sorties et entrées du capteur. Les termes diagonaux de $T(j\omega)$ sont donc les fonctions de transfert de chaque voie du capteur et les termes hors diagonale représentent les termes de couplage entre voies. Ces termes hors diagonale sont faibles par construction du capteur et seront négligés dans la description ultérieure de l'invention bien que le procédé puisse s'appliquer de la même

façon. Pour pouvoir modéliser avec précision $[\vec{B}_c(j\omega)]$, il faut donc connaître avec précision les termes complexes de la matrice $T(j\omega)$ en fonction de la pulsation, en amplitude et en phase.

L'invention a pour objet un procédé et un dispositif dont le principe repose sur l'injection de signaux de calibration en superposition des signaux utiles, qui ne modifient pas l'estimation de ces signaux utiles et qui soient parfaitement discernables et mesurés sans erreur, puis sur l'identification de la fonction de transfert du capteur afin de corriger les mesures par l'inverse de la fonction de transfert complexe de la voie correspondante.

Selon l'invention, il est donc prévu un procédé de mesure magnétique de la position et de l'orientation d'un objet mobile par rapport à une structure fixe, dans lequel un premier ensemble émetteur inclut au moins deux bobines orthogonales d'émission de champs magnétiques, solidaires de ladite structure fixe, qui définissent un repère de référence, et des moyens d'émission pour injecter dans lesdites bobines des courants d'émission prédéterminés à des premièrs fréquences, dans lequel un second ensemble capteur inclut au moins deux bobines orthogonales de détection de champs magnétiques, solidaires dudit objet mobile, des voies de capteurs à boucles d'asservissement pour produire dans des bobines de contre-réaction couplées auxdites bobines de détection des champs magnétiques de contre-réaction par injection de courants de mesure et une voie de calibration pour élaborer au moins une tension de calibration, et dans lequel au moins une voie d'acquisition est prévue pour extraire des valeurs de mesure desdites voies d'émission, desdites voies de capteurs et de ladite voie de calibration et des moyens de calcul et de traitement estiment, à partir desdites valeurs de mesure, les champs magnétiques détectés dans le second ensemble capteur et en déduisent la position et l'orientation dudit objet mobile dans ledit repère de référence, ledit procédé étant caractérisé en ce que ladite tension de calibration ne comporte que des termes à au moins deux fréquences distinctes desdites premières fréquences et en ce que ledit procédé comprend une étape d'injection de tensions et courants de calibration dans lesdites voies du capteur pour produire des valeurs de mesure de calibration identifiées par leur fréquence, une étape d'estimation par les moyens de calcul de la fonction de transfert de chacune des voies de capteur et une étape de déduction par lesdits moyens de calcul des champs magnétiques détectés à partir desdites valeurs de mesure et de l'inverse desdites fonctions de transfert estimées.

L'invention prévoit également un tel procédé dans lequel les boucles d'asservissement des voies de capteur fournissent des tensions de sortie produisant lesdits courants de mesure et lesdits courants de mesure s'écoulent à travers des résistances de mesure pour fournir des tensions de mesure, caractérisé en ce que l'on superpose la tension de calibration auxdites tensions de sortie pour la production desdits courants de mesure, et en ce que ladite étape d'estimation des fonctions de transfert s'effectue, à partir de la séparation des termes fréquentiels de calibration dans lesdites tensions de sortie, par approximation polynomiale pour lesdites premières fréquences.

Selon un autre aspect de l'invention, il est prévu un dispositif de mesure magnétique de la position et de l'orientation d'un objet mobile par rapport à une structure fixe, du type comprenant :

- un premier ensemble émetteur incluant au moins deux bobines orthogonales d'émission de champs magnétiques, solidaires de ladite structure fixe et définissant un repère de référence, et des moyens d'émission pour injecter dans lesdites bobines des courants prédéterminés à des premières fréquences et constituer avec lesdites bobines au moins deux voies d'émission ;
- un second ensemble capteur incluant au moins deux bobines orthogonales de détection de champs magnétiques, solidaires dudit objet mobile, des moyens de mesure par boucles d'asservissement, pour produire dans des bobines de contre-réaction couplées auxdites bobines de détection des champs magnétiques de contre-réaction par injection de courants de mesure et pour constituer avec lesdites bobines de détection au moins deux voies de capteur, et des moyens de calibration comprenant une voie de calibration pour élaborer au moins une tension de calibration à des secondes fréquences ;

- au moins une voie d'acquisition de mesures pour extraire des valeurs de mesure desdites voies d'émission, desdites voies de capteur et de ladite voie de calibration ; et
- des moyens de calcul et de traitement pour estimer, à partir desdites valeurs de mesure, les champs magnétiques détectés dans le second ensemble capteur et en déduire la position et l'orientation dudit objet mobile dans ledit repère de référence,

caractérisé en ce que lesdites secondes fréquences sont distinctes desdites premières fréquences, en ce que lesdits moyens de calibration sont prévus pour injecter des tensions et courants de calibration dans lesdites voies de capteur pour produire des valeurs de mesure de calibration identifiées par leurs fréquences et adressées auxdits moyens de calcul par la ou lesdites voies d'acquisition et en ce que lesdits moyens de calcul et de traitement sont prévus pour estimer la fonction de transfert de chacune des voies de capteur et déduire les champs magnétiques détectés desdites valeurs de mesure et de l'inverse desdites fonctions de transfert estimées.

L'invention sera mieux comprise et d'autres caractéristiques et avantages apparaîtront à l'aide de la description ci-après et des dessins joints où :

- la Figure 1 est un schéma de principe d'un dispositif du type mis en oeuvre dans un viseur de casque ;
- la Figure 2 est un schéma synoptique de l'architecture d'un tel dispositif adapté à un environnement magnétique perturbé ;
- la Figure 3 est un schéma explicatif de principe d'une voie de capteur selon l'invention ;
- la Figure 4 est une représentation de la voie de la Figure 3 en utilisant les transformées de Laplace ;
- la Figure 5 est un schéma simplifié du capteur selon l'invention en ne considérant que la détermination de la fonction de transfert de chaque voie ;
- la Figure 6 est un schéma prenant en compte en outre l'identification des composants variables du capteur ; et
- la Figure 7 est le schéma d'un mode de réalisation pratique d'un dispositif de mesure magnétique selon l'invention.

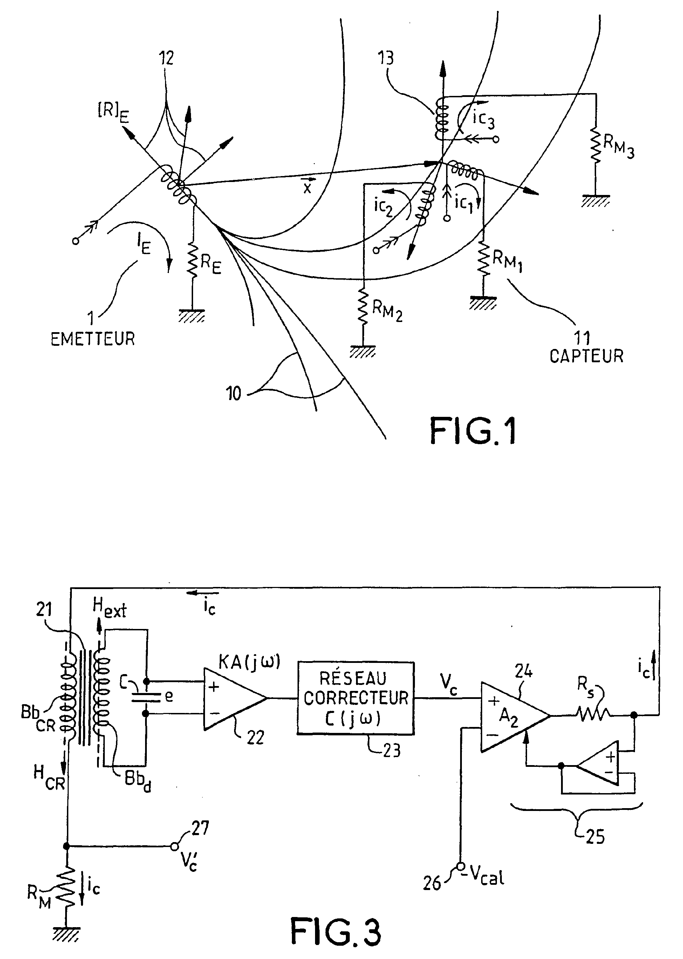

Comme on l'a brièvement expliqué ci-dessus, l'invention concerne la mesure magnétique précise de la position et de l'orientation d'un objet mobile par rapport à une structure fixe. La Figure 1 est un schéma de principe d'un tel dispositif.

Son objet consiste à déterminer la position et l'orientation d'un capteur magnétique 11 dans le repère orthonormé $[R]_E$ 12 formé par les 3 bobines d'un émetteur 1 de champ magnétique $\vec{B}_E(\vec{x})$. On notera que, par souci de clarté et de simplification, seule une bobine d'émission a été représentée sur la Figure 1. La généralisation à trois bobines est immédiate.

Au point $\vec{x}$, qui indique la position du capteur 11 dans le repère $[R]_E$, l'induction $\vec{B}_E(\vec{x})$ se projette sur les 3 axes des bobines de détection et de contre-réaction 13 du capteur. Les courants de contre-réaction $i_{c1}$, $i_{c2}$, $i_{c3}$ mis en oeuvre dans le capteur 11 annulent ces projections, par un procédé d'asservissement connu de l'homme du métier. $i_{c1}$, $i_{c2}$, $i_{c3}$ représentent donc les mesures d'induction magnétique selon les directions des axes du capteur.

En effet, pour une émission sur une seule bobine telle que représentée sur la Figure 1, il est connu qu'en un point $\vec{x}$ de l'espace, pour un émetteur orthonormé et un capteur orthonormé, le capteur 11 mesure :

$$\begin{pmatrix} i_{c1} \\ i_{c2} \\ i_{c3} \end{pmatrix} = k \left[ R^t{}_{C/E} \right] \begin{pmatrix} f_1(\vec{x}) \\ f_2(\vec{x}) \\ f_3(\vec{x}) \end{pmatrix} i_E \qquad (1)$$

où $R^t{}_{C/E}$ est la matrice transposée de la matrice de passage du référentiel émetteur vers le référentiel capteur, formée des vecteurs unitaires des axes capteur exprimés dans le référentiel émetteur, et k un terme de proportionnalité dépendant des unités choisies, $f_1(\vec{x})$, $f_2(\vec{x})$, $f_3(\vec{x})$ étant les composantes de $\vec{B}_E(\vec{x})$ au point $\vec{x}$ dans le référentiel 12 $[R]_E$ formé par l'émetteur 1 pour un courant d'émission unité.

En faisant les rapports $\dfrac{i_{c1}}{i_E}$, $\dfrac{i_{c2}}{i_E}$, $\dfrac{i_{c3}}{i_E}$ (où $i_E$ est le courant d'émission), il ne reste que l'information de position $\vec{x}$ et de rotation X, Y, Z du capteur 11 dans l'expression de la mesure (1) ci-dessus. Dans le cas plus général de trois émissions selon les troix axes de l'émetteur, l'obtention de la matrice 3x3 de terme générique $i_{ci} / i_{Ej}$, où $i$ et $j$ sont des indices de valeur 1 à 3, donne donc aisément accès à l'orientation et à la position du capteur 11 dans le référentiel 12 de l'émetteur 1.

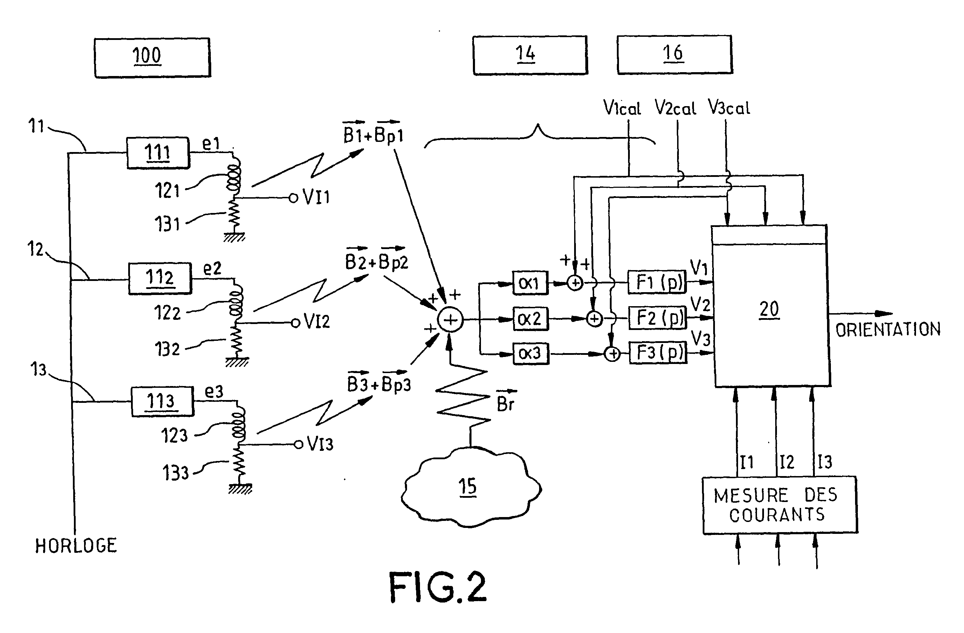

La Figure 2 illustre l'architecture de principe d'un dispositif tel que décrit ci-dessus. On considère le cas général d'une utilisation dans un environnement de perturbations magnétiques dues par exemple à la présence de corps conducteurs et/ou de corps de type ferromagnétique.

Un bloc 1 de génération des signaux est constitué de trois voies $1_1$ à $1_3$. Chaque voie $1_1$ à $1_3$ comprend un générateur $11_1$ à $11_3$ de courant $i_{B1}$ à $i_{B3}$, une bobine $12_1$ à $12_3$ et une résistance $13_1$ à $13_3$. Le passage du courant dans les bobines $12_1$ à $12_3$ permet la création d'un champ magnétique $B_1$ à $B_3$ respectivement pour chacune des voies $1_1$ à $1_3$. Les courants $i_{B1}$ à $i_{B3}$ injectés dans les bobines $12_1$ à $12_3$ sont préférentiellement produits par des générateurs de courant d'impédance interne supérieure à 500kΩ. Selon un mode de réalisation préférentiel, les générateurs de courant $11_1$ à $11_3$ sont connectés à des bobines non accordées. L'invention s'applique bien sûr également au cas où les générateurs de courant $11_1$ à $11_3$ sont connectés à des bobines accordées.

Des perturbations magnétiques, qui prennent naissance dans les matériaux ferromagnétiques et/ou les matériaux conducteurs environnant le dispositif de viseur de casque illustré sur la Figure 1, se superposent aux champs $B_1$ à $B_3$ sous la forme de champs magnétiques perturbateurs $B_{p1}$ à $B_{p3}$.

Le capteur 14 reçoit la somme des champs $B_1$ à $B_3$ émis respectivement par les voies $1_1$ à $1_3$ du bloc de génération des signaux 1, des champs perturbateurs $B_{p1}$ à $B_{p3}$, et d'éventuelles perturbations rayonnées 15 $B_r$.

Un bloc 16 de calibration du capteur délivre les signaux de calibration $V_{1cal}$, $V_{2cal}$, $V_{3cal}$.

A l'issue des différents traitements appliqués aux champs reçus, le bloc 20 délivre en sortie la matrice $C_{ij}$ des couplages émetteur-capteur en espace libre, qui permet de calculer de façon connue la position et l'orientation du capteur 14 dans le repère de l'émetteur 1 du dispositif de viseur de casque.

Le bloc 20 permet :

- de séparer et mesurer les grandeurs électriques (tensions et courants) de mesure et de calibration grâce au fait qu'elles sont disjointes en fréquence ;
- de modéliser les champs reçus par des techniques itératives ;
- d'identifier les champs constants avec la fréquence permettant d'estimer le champ magnétique émis en espace libre en éliminant les champs perturbateurs ;
- d'estimer la position et l'orientation du viseur de casque portant le capteur.

La Figure 3 est un schéma explicatif plus détaillé du principe d'une voie de capteur du dispositif selon l'invention. On veut mesurer au niveau du capteur l'induction magnétique $B_{ext}$ ambiante. Pour cela, on utilise, pour chaque voie, une bobine de détection $Bb_d$ bobinée en même temps qu'une bobine de contre-réaction $BB_{CR}$ associée autour d'un noyau 21 commun en matériau magnétique très perméable $\left( \dfrac{\mu}{\mu_0} \gg 1 \right)$. On sait que l'induction magnétique est liée au champ magnétique par la relation $B_{ext} = \mu H_{ext}$. Aux bornes de la bobine de détection $Bb_d$, on mesure la variation de flux :

$$e = -\frac{d\phi}{dt} = -N_d \ S_d \ \frac{d\left(B_{ext} - B_{CR}\right)}{dt}$$

où $N_d$ et $S_d$ représentent le nombre de spires et leur surface moyenne. Cette mesure s'effectue à l'aide d'une boucle d'asservissement comprenant un amplificateur 22 de fonction de transfert $KA(j\omega)$ recevant la tension $\underline{e}$ prélevée aux bornes d'une capacité C rajoutée pour diminuer fortement le facteur de surtension propre de la bobine de détection, un réseau correcteur 23 permettant de stabiliser la boucle d'asservissement, un amplificateur 24 de gain $A_2$, et un générateur de courant 25 avec une résistance pure constante $R_s$ qui fixe le coefficient de transfert tension/courant à l'amplificateur 24. Le générateur de courant 25 génère le courant $i_c$ de contre-réaction qui est injecté dans la bobine de contre-réaction $Bb_{CR}$. Ce courant $i_c$ est envoyé vers la masse à travers une résistance de mesure $R_M$. Sur la borne 27, on trouve une tension de mesure $V'_c$ représentant la valeur du courant de mesure $i_c$. Enfin, selon une caractéristique de l'invention, on superpose une tension de calibration $-V_{cal}$, appliquée à la borne 26, à la tension de sortie $V_c$ de la voie de capteur, présente à l'entrée de l'amplificateur 24.

L'induction magnétique de contre-réaction $B_{CR}$, produite par l'injection du courant $i_c$, dans la bobine $BB_{CR}$ s'écrit :

$$B_{CR} = N_{CR} \ \mu \ k_B \ i_c = \mu \ k_{CR} i_c$$

où $N_{CR}$ est le nombre de tours par unité de longueur et $k_B$ est une constante dépendant des unités utilisées, avec par définition $H_{CR} = \dfrac{B_{CR}}{\mu} = k_{CR}\, i_c$ .

Si l'asservissement opère correctement, on a $B_{ext} \cong B_{CR}$ et la tension $\underline{e}$ tend vers zéro.

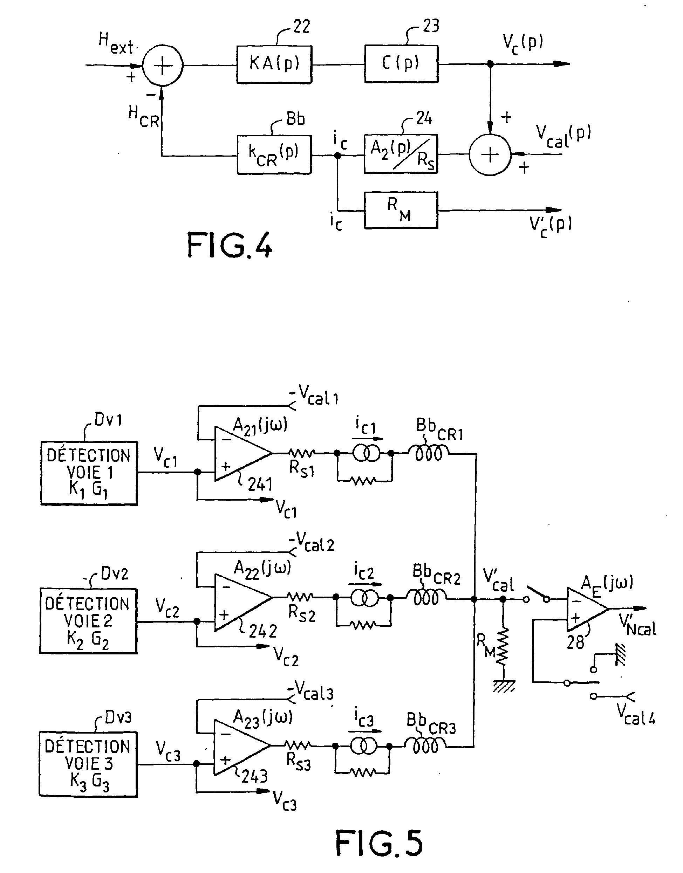

On a représenté sur la Figure 4 le schéma de la voie de la Figure 3 en utilisant les transformées de Laplace des variables temporelles pour passer aux fonctions de transfert. Pour déterminer la fonction de transfert en fonction de la pulsation, il suffit de faire $p = j\omega$. Dans cette représentation, K est un gain statique constant proportionnel au produit $N_d\, S_d\, \mu(p)$. $A_2(p)$ est le gain complexe de l'amplificateur 24. En fonction de la qualité et donc du coût de cet amplificateur, le gain peut être constant dans toute la bande de fonctionnement en fonction de $\omega$, constant en fonction de l'environnement ou bien non constant.

Comme on l'a vu dans l'introduction, il est nécessaire de connaître avec précision les fonctions de transfert complexes de chacune des voies du capteur pour obtenir les valeurs $H_{ext}$ qui sont les entrées que l'on cherche à mesurer. La tension $V_{cal}$ est une entrée secondaire que l'on a rajoutée pour calibrer le système selon l'invention.

En posant :

$$G(j\omega) = A(j\omega)\, C(j\omega)$$

$$R(j\omega) = k_{CR}\, \frac{A_2(j\omega)}{R_s}$$

on obtient :

$$T_v(j\omega) = \frac{KGR}{1 + KGR}$$

Or, on peut écrire :

$$V_c(j\omega) = -T_v(j\omega)\, V_{cal}(j\omega) + T_v(j\omega)\left(\frac{H_{ext}(j\omega)}{R(j\omega)}\right) \qquad (a)$$

$$V'_c(j\omega) = R_M\left[(1 - T_v(j\omega))\frac{A_2(j\omega)}{R_s}\, V_{cal}(j\omega) + T_v(j\omega)\left(\frac{H_{ext}(j\omega)}{k_{CR}}\right)\right] \qquad (b)$$

Comme on peut le constater, grâce à la superposition de signaux de calibration $V_{cal}(j\omega_{cal})$ à des pulsations $\omega_{cal}$ différentes des pulsations $\omega_u$ des signaux utiles de $H_{ext}(j\omega_u)$ émises par l'émetteur, on peut séparer les termes fréquentiels (par exemple par FFT, en anglais « Fast Fourier Transform », ou par détection synchrone) et obtenir la mesure de la fonction de transfert $T_v(j\omega)$. En effet, à partir de l'équation (a) en isolant les termes de pulsation $\omega_{cal}$, on a :

$$V_c(j\omega_{cal}) = -T_v(j\omega_{cal})\, V_{cal}(j\omega_{cal})$$

On peut alors identifier la valeur estimée de $T_v$ :

$$\widehat{T_v\left(j\omega\right)} = F\left(V_c\left(j\omega_{cal}\right), V_{cal}\left(j\omega_{cal}\right), j\omega\right)$$

où F indique un modèle d'interpolation tel qu'une approximation polynomiale.

A partir de cette valeur estimée, on peut isoler dans la relation (a) pour les pulsations $\omega_u$ :

$$V_c\left(j\omega_u\right) = \widehat{T_v\left(j\omega_u\right)} \frac{H_{ext}\left(j\omega_u\right)}{R\left(j\omega_u\right)}$$

d'où :

$$:\widehat{H_{ext}\left(j\omega_u\right)} = R\left(j\omega_u\right)\frac{V_c\left(j\omega_u\right)}{\widehat{T_v\left(j\omega_u\right)}}$$

Le problème qui se pose alors est que le terme $R\left(j\omega_u\right) = \dfrac{k_{CR}\; A_2\left(j\omega_u\right)}{R_s}$ n'est pas identifié. En effet, $k_{CR}$ est considéré comme constant et identifiable en usine car, homogène à un nombre de tours par unité de longeur, il est invariable dans le temps et indépendant de la température et des conditions d'environnement. Par contre, ce n'est le cas ni de la résistance $R_s$, ni du gain $A_2$. Or, ces composants conditionnent la précision des paramètres que l'on cherche à mesurer.

Il faut donc prévoir un dispositif à calibration adéquate pour déterminer ces composants dans chaque voie.

La Figure 5 illustre un schéma simplifié permettant d'identifier certains éléments importants de chaque voie du capteur.

En utilisant les indices 1 à 3 pour les trois voies du capteur correspondant à trois bobines de détection orthogonales, on a schématisé l'ensemble amplificateur 22/correcteur 23 de la Figure 4 par un bloc, respectivement Dv1 à Dv3, fournissant une tension de sortie $V_{c1}$, à $V_{c3}$. L'ensemble 24 de la Figure 4 est schématisé par un amplificateur 241 à 243 de gain $A_{21}(j\omega)$ à $A_{23}(j\omega)$, une résistance $R_{s1}$ à $R_{s3}$ et un générateur de courant fournissant le courant $i_{c1}$ à $i_{c3}$ de contre-réaction aux bobines de contre-réaction $Bb_{CR1}$ à $Bb_{CR3}$. Une résistance de mesure $R_M$ permet d'adresser la tension de mesure $V'_{cal}$ à une voie d'acquisition incluant l'amplificateur 28 de gain $A_E(j\omega)$ et qui fournit, après traitement, en sortie une valeur numérisée $V'_{Ncal}$. Une seconde entrée de l'amplificateur 28 soit est mise à la masse, soit reçoit une valeur de calibration $V_{cal4}$. Des tensions de calibration $- V_{cal1}$ à $- V_{cal3}$ sont appliquées aux entrées inverses des amplificateurs 241 à 243.

En usine, on met à la masse les tensions de sortie $V_{c1}$ à $V_{c3}$. En désignant par i l'indice des voies du capteur, on applique alternativement $V_{cali} = V_{cal}\left(j\omega_{cal}\right)$ sur l'entrée de chaque voie pendant que les entrées de calibration des autres voies sont à la masse. On a :

$$V'_{cal}\left(j\omega_{cal}\right) = R_M\left(\frac{V_{cali}.A_{2i}\left(j\omega_{cal}\right)}{R_{si}}\right)$$

d'où on déduit $\dfrac{R_M}{R_{si}}\; A_{2i}(j\omega)$ pour chaque voie. Mais si le gain $A_{2i}(j\omega)$ varie dans des proportions gênantes, on doit alors faire appel à la combinaison des relations (a) et (b) ci-dessus. Comme déjà mentionné, (a) fournit $\widehat{T_v\left(j\omega\right)}$.

En effectuant la séparation fréquentielle des signaux selon la pulsation $\omega_u$ ou $\omega_{cal}$, on dispose par la relation (b) de :

$$V'_c \left( j\omega_{cal} \right) = R_M \left( 1 - T_v \left( j\omega_{cal} \right) \right) \frac{A_2 \left( j\omega_{cal} \right)}{R_s} V_{cal} \left( j\omega_{cal} \right)$$

d'où :

$$A_2 \left( j\omega_{cal} \right) \frac{R_M}{R_S} = \frac{1}{1 - \widehat{T_v \left( j\omega_{cal} \right)}} \frac{V'_c \left( j\omega_{cal} \right)}{V_{cal} \left( j\omega_{cal} \right)}$$

et comme :

$$\widehat{T_v \left( j\omega_{cal} \right)} = - \frac{V_c \left( j\omega_{cal} \right)}{V_{cal} \left( j\omega_{cal} \right)}$$

on obtient :

$$A_2 \left( j\omega_{cal} \right) \frac{R_M}{R_s} = \frac{V'_c \left( j\omega_{cal} \right)}{V_{cal} \left( j\omega_{cal} \right) - V_c \left( j\omega_{cal} \right)}$$

On en déduit $\widehat{A_2 \left( j\omega \right) \dfrac{R_M}{R_s}}$ par approximation polynomiale de la même façon que pour $T_v \left( j\omega \right)$.

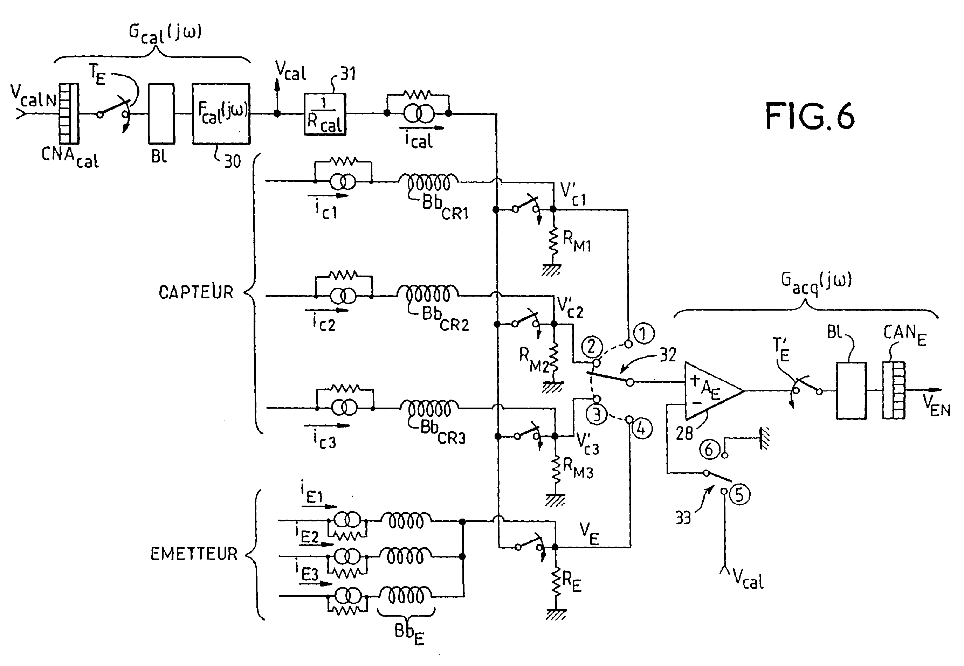

Cependant, cette solution permet de tenir compte du vieillissement dans le temps des composants impliqués, mais si les paramètres $A_2$, $R_M$, $R_{si}$ varient pendant la mission en fonction de la température, cette solution impose d'arrêter les mesures pour effectuer la calibration ($V_{ci}$ mis à la masse), ce qui est contraire au but recherché dans l'invention. On est donc conduit au schéma, conforme au principe de la Figure 3, décrit dans la Figure 6 mais où $i_{c1}$ à $i_{c3}$ représentent la somme des courants l'un produit par la tension du capteur $V_{ci}$ et l'autre par la tension de calibration. Dans ce schéma, la grandeur de sortie est la tension $V'_{ci}$ au lieu de $V_{ci}$.

Si on considère que, dans chaque bobine d'émission d'indice $j$ (avec $j$ prenant les valeurs 1 à 3), circule un courant d'émission de pulsations $\omega_{j,k_j}$ où $k_j$ varie de $K_j$ à $K_j$ max, toutes ces pulsations étant distinctes entre elles et distinctes des pulsations $\omega_{cal}$ de calibration, on peut écrire à partir de la relation (b) pour la voie de capteur $i$ :

$$V'_{ci} \left( j\omega_{j,k_j} \right) = R_{Mi} \left[ \widehat{T_v \left( j\omega_{j,k_j} \right)} \right] \frac{H_{ext\,i} \left( j\omega_{j,k_j} \right)}{k_{CR}}$$

soit :

$$V'_{ci} \left( j\omega_{j,k_j} \right) = \frac{R_{Mi}}{k_{CRi}} \left[ \widehat{T_v \left( j\omega_{j,k_j} \right)} \right] i_{Ej} \left( j\omega_{j,k_j} \right) H_{ext\,i\,Norm} \left( j\omega_{j,k_j} \right)$$

où: $H_{ext\,i\,Norm}$

est la valeur normalisée du champ émis pour un courant d'émission de 1 ampère.

Dans la suite de la description et pour simplifier on ne notera plus les pulsations $\omega_{j,k_j}$ utiles mais on notera simplement $\omega_u$ de même que l'on note $\omega_{cal}$ pour les pulsations de calibration, étant entendu que toutes ces pulsations sont distinctes et séparables fréquentiellement.

Comme on le voit dans la dernière relation ci-dessus donnant $V'_{ci}$, on pourra connaître avec précision $H_{ext\,Norm}$ à condition d'identifier $R_{Mi}$ et $i_{Ej}$. On se rapporte pour cela au schéma modifié de la Figure 6, où on retrouve, partiellement, les trois voies d'émission de l'émetteur et les trois voies de capteur. On a, en outre détaillé une voie de calibration et la voie d'acquisition commune. La voie de calibration comporte en série un convertisseur numérique-analogique $CNA_{cal}$, un échantillonneur bloqueur $BI$ à la période $T_E$, un filtre 30 de fonction de transfert $F_{cal}(j\omega)$ fournissant une tension de calibration $V_{cal}$ à partir de la valeur numérique $V_{calN}$, l'ensemble de cette chaîne ayant une fonction de transfert $G_{cal}(j\omega)$. Un courant de calibration $i_{cal}$ est fourni à partir de la tension $V_{cal}$ à l'aide d'une résistance $R_{cal}$ et d'un générateur de courant.

La voie d'acquisition, de fonction de transfert $G_{acq}(j\omega)$, comprend un amplificateur 28 de gain $A_E$, un bloqueur $BI$ et un convertisseur analogique/numérique $CAN_E$ pour fournir une valeur de tension numérique de mesure $V_{EN}$. L'entrée directe de l'amplificateur 28 est relié par un commutateur 32 à l'un des contacts 1 à 4, permettant de relier en multiplex la voie d'acquisition à la tension de mesure d'une des trois voies de capteur ou de la somme des trois voies d'émission. L'entrée inverse de l'amplificateur 28 est reliée par un commutateur 33 soit à la masse 6, soit par le contact 5 à la tension de calibration $V_{cal}$. En connectant l'amplificateur 28 seulement à la masse par le contact 6, on peut mesurer le bruit propre de la chaîne d'acquisition.

Après un cycle de calibration où on injecte $V_{cal}$ par le contact 5, puis où on injecte séquentiellement le courant $i_{cal}$ sur les résistances de mesure $R_{M1}$ à $R_{M3}$ et $R_E$, on dispose des mesures suivantes :

$$V_{EN}^{(5)}(j\omega) = G_{acq}(j\omega)\,G_{cal}(j\omega)\,V_{calN}(j\omega) \tag{c}$$

$$V_{EN}^{4}(j\omega) = G_{acq}(j\omega)\,R_E\left[i_{E1}(j\omega_{u1}) + i_{E2}(j\omega_{u2}) + i_{E3}(j\omega_{u3}) + G_{cal}(j\omega_{cal})\frac{V_{calN}(j\omega_{cal})}{R_{cal}}\right] \tag{d}$$

$$V_{EN1}^{(1)}(j\omega) = G_{acq}(j\omega)\,R_{M1}\left[i_{c1} + G_{cal}(j\omega_{cal})\frac{V_{calN}(j\omega_{cal})}{R_{cal}}\right] \tag{e.1}$$

$$V_{EN2}^{2}(j\omega) = G_{acq}(j\omega)\,R_{M2}\left[i_{c2} + G_{cal}(j\omega_{cal})\frac{V_{calN}(j\omega_{cal})}{R_{cal}}\right] \tag{e.2}$$

$$V_{EN3}^{3}(j\omega) = G_{acq}(j\omega)\,R_{M3}\left[i_{c3} + G_{cal}(j\omega_{cal})\frac{V_{calN}(j\omega_{cal})}{R_{cal}}\right] \tag{e.3}$$

Il est clair que les courants $i_{c1}$, $i_{c2}$ et $i_{c3}$ contiennent toutes les composantes aux pulsations $\omega_{1,k_1}$ à $\omega_{3,k_3}$ distinctes entre elles et distinctes des composantes aux pulsations $\omega_{cal}$. On peut donc les séparer entre elles. Ainsi le deuxième membre de l'équation (d) peut se subdiviser en deux termes $G_{acq}(j\omega_u)\,R_E\,\sum_j i_{Ej}(j\omega_{uj})$, qu'on désignera par

$$V_{ENI}^{(4)} \text{ , et } G_{acq}\left(j\omega_{cal}\right) R_E \; G_{cal}\left(j\omega_{cal}\right)\left[\frac{V_{calN}\left(j\omega_{cal}\right)}{R_{cal}}\right] \text{ qu'on désignera par } V_{ENcal}^{(4)} \text{ .}$$

Les mêmes notations seront utilisées pour les relations (e.1) à (e.3) qui s'écriront avec deux termes $V_{ENil}^{(i)}$ et $V_{ENcal}^{(i)}$ .

Enfin la relation (c) n'aura qu'un seul terme écrit $V_{ENcal}^{(5)}$ .

On déduit facilement de toutes ces relations que :

$$\frac{R_E}{R_{cal}} = \frac{V_{ENcal}^{(4)}}{V_{ENcal}^{(5)}} \qquad\qquad \frac{R_{M1}}{R_{cal}} = \frac{V_{EN1cal}^{(1)}}{V_{ENcal}^{(5)}}$$

$$\frac{R_{M2}}{R_{cal}} = \frac{V_{EN2cal}^{(2)}}{V_{ENcal}^{(5)}} \qquad\qquad \frac{R_{M3}}{R_{cal}} = \frac{V_{EN3cal}^{(3)}}{V_{ENcal}^{(5)}}$$

d'où :

$$\frac{R_{M1}}{R_E} = \frac{V_{EN1cal}^{(1)}}{V_{ENcal}^{(4)}} \tag{f}$$

et des relations semblables pour $\dfrac{R_{M2}}{R_E}$ et $\dfrac{R_{M3}}{R_E}$ .

Comme on l'a vu, pour $\omega_{uj}$ :

$$V_{ENil}^{(i)} = G_{acq} \; R_{Mi} \; i_{ci}$$

Or de (b), on tire, toujours pour $\omega_{uj}$ :

$$i_{ci} = \widehat{T_{vi}} \frac{H_{ext\,i}}{k_{CRi}}$$

soit:

$$V_{ENil}^{(i)} = G_{acq} \; R_{Mi} \; \frac{i_{Ej}}{k_{CRi}} \; H_{ext\,i\,Norm} \; \widehat{T_{vi}} \tag{g}$$

De la relation (d) pour $\omega_{uj}$ , on obtient :

$$V_{ENI}^{(4)} = G_{acq}\ R_E\ i_{Ej} \tag{h}$$

En combinant (g) et (h), on a :

$$V_{ENil}^{(i)} = \frac{\widehat{R_{Mi}}}{R_E}\ \frac{V_{ENI}^{(4)}}{k_{CRi}}\ \widehat{T_{vi}}\ H_{ext\ i\ Norm} \tag{i}$$

les rapports $\dfrac{R_{Mi}}{R_E}$ sont identifiés par les relations (f), d'où :

$$V_{ENI}^{(i)}\left(j\omega_{uj}\right) = \left(\widehat{\frac{V_{ENical}^{(i)}}{V_{ENcal}^{(4)}}}\right) \frac{V_{ENI}^{(4)}\left(j\omega_{uj}\right)}{k_{CRi}} \widehat{T_{vi}}\left(j\omega_{uj}\right) H_{ext\ i\ Norm} \tag{j}$$

Ces termes $V_{ENI}^{(i)}\left(j\omega_{uj}\right)$ forment une matrice à neuf termes, qui ne dépendent que de $k_{CRi}$ puisque tous les autres facteurs sont identifiés. En fait, $k_{CRi}$ peut être considéré comme invariable pour les trois voies du capteur.
On tire donc de la relation (j) l'expression des sorties désirées :

$$H_{ext\ i}\left(j\omega_{uj}\right) = A^{-1}\ B^{-1}\ \widehat{T_{vi}^{-1}}\left(j\omega_{uj}\right) \tag{k}$$

avec $T_v^{-1} = \dfrac{1}{\rho_T}\ e^{-j\phi_T}$ si on écrit $T_v$ sous la forme complexe classique

$$T_v\left(j\omega\right) = \rho_T\left(j\omega\right)e^{j\phi_T\ (j\omega)}$$

$$A^{-1} = \frac{V_{ENcal}^{(4)}}{V_{ENical}^{(i)}}\quad \text{constante en fréquence}$$

$$B^{-1} = k_{CRi}\ \frac{1}{\rho_j}\ e^{-j\phi_j}$$

$$\text{si}\ \ V_{ENI_j}^{(4)}\left(j\omega_{uj}\right) = \rho_j\left(j\omega_{uj}\right)e^{j\phi_j\left(j\omega_{uj}\right)}$$

Ainsi, la relation finale (k) montre que l'on a bien compensé la mesure du champ magnétique à l'aide de l'inverse de la fonction de transfert de la voie du capteur.

La réalisation de la Figure 6 que l'on vient d'analyser est basée sur l'utilisation d'une voie d'acquisition unique pour toutes les mesures, ce qui a un avantage évident de simplicité.

Cependant, cela suppose son utilisation selon un échantillonnage séquencé avec une période $T_E$ telle que :

$$T'_E = \frac{T_E}{N_a}$$

où $N_a$ est le nombre de voies différentes à acquérir pendant la période $T_E$.

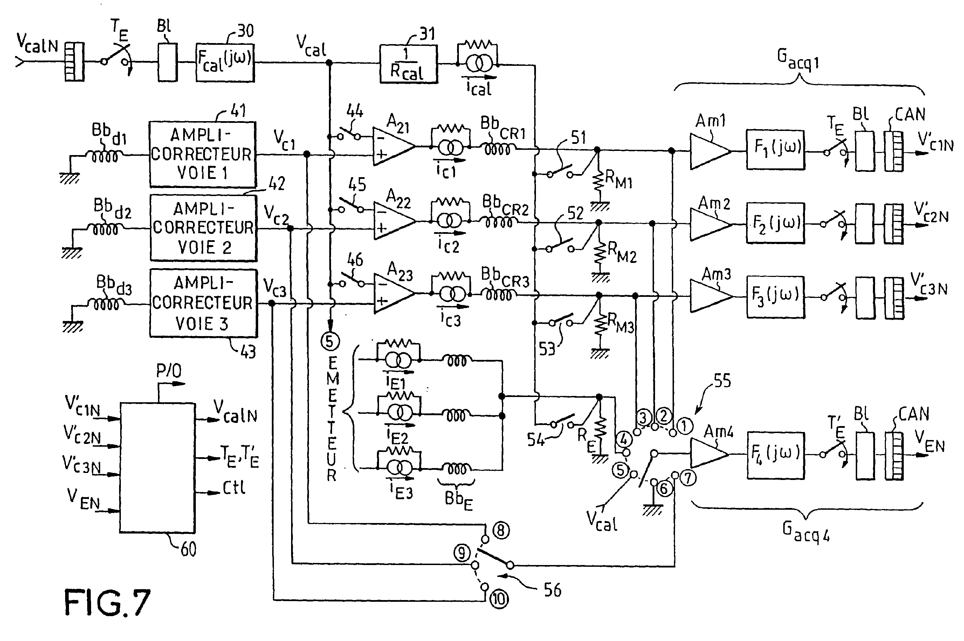

Si le temps de réponse de $G_{acq}(j\omega)$ est trop long par rapport à $T'_E$, il faudra alors adopter le schéma du mode de réalisation de la Figure 7.

Sur cette Figure 7, on doit prévoir quatre voies d'acquisition avec amplification/filtrage :

- trois voies d'acquisition des courants de mesure $i_{ci}$ opérant avec la période $T_E$ de façon continue (s'il est suffisamment rapide, on peut n'utiliser qu'un seul convertisseur CAN multiplexant les trois voies filtrées et échantillonnées/bloquées au même instant) ;
- une voie d'acquisition multiplexée opérant seulement sur la calibration à une cadence faible, ce qui n'est pas gênant pour identifier des paramètres lentement variables.

Les trois voies de capteurs comprennent donc chacune, comme déjà décrit, une bobine de détection, $Bb_{d1}$ à $Bb_{d3}$, un ensemble amplificateur/correcteur, 41 à 43, fournissant la tension de sortie $V_{c1}$ à $V_{c3}$, un amplificateur $A_{21}$ à $A_{23}$ recevant la tension de sortie sur une entrée et la tension de calibration via un commutateur 44 à 46 sur l'autre entrée, un générateur de courant de contre-réaction $i_{c1}$ à $i_{c3}$, une bobine de contre-réaction $Bb_{CR1}$ à $Bb_{CR3}$ et une résistance $R_{M1}$ à $R_{M3}$ de mesure du courant de contre-réaction sur lequel on peut superposer le courant de calibration $i_{cal}$ via un commutateur 51 à 53. A chacune des voies du capteur correspond une voie d'acquisition de mesure $G_{acq1}$ à $G_{acq3}$ comprenant un amplificateur $A_{m1}$ à $A_{m3}$, un filtre $F_1(j\omega)$ à $F_3(j\omega)$, un bloqueur $Bl$ et un convertisseur analogique/numérique $CAN$ pour fournir la tension de mesure numérisée $V'_{c1N}$ à $V'_{c3N}$. Par ailleurs, les voies émetteur partiellement représentées sont connectées pour envoyer les courants d'émission $i_{E1}$ à $i_{E3}$ sur une résistance de mesure $R_E$ sur laquelle on peut aussi superposer le courant de calibration par le commutateur 54, cette résistance étant reliée au contact 4 d'un commutateur 55. Ce commutateur 55 permet de relier l'entrée d'une quatrième voie d'acquisition, multiplexée mais semblable par ailleurs aux trois premières voies, aux tensions de mesure sur les résistances de mesure par les contacts 1 à 4, à la tension de calibration par le contact 5, à la masse par le contact 6 et aux tensions de sortie des trois voies de capteur par le contact 7 et le commutateur 56.

Toutes les valeurs de mesure numérisées sont envoyées à un processeur 60 de traitement qui effectue les diverses opérations de mesure et calibration et de séparation fréquentielle mentionnées dans les relations ci-dessus et en déduit la position et l'orientation P/O du capteur, tout en fournissant les signaux de contrôle $Ctl$ nécessaires au fonctionnement de l'ensemble ainsi que la valeur de calibration $V_{CalN}$ et les périodes $T_E$ et $T'_E$.

Ainsi, on peut voir que, par l'intermédiaire du commutateur 56, de la voie d'acquisition $G_{acq4}$ et des contacts 7 et 5 de 55, on peut déterminer $\widehat{T_{v1}}$, $\widehat{T_{v2}}$ et $\widehat{T_{v3}}$ selon la relation (a). D'autre part, la voie d'acquisition $G_{acq4}$ permet de calibrer, selon la relation (f), les valeurs $\dfrac{R_{M1}}{R_E}$ à $\dfrac{R_{M3}}{R_E}$. Les cycles d'acquisition et de calibration ci-dessus sont indépendants des cycles de la mesure continue des courants circulant dans $R_{M1}$ à $R_{M3}$ par les trois premières voies.

Par rapport à la figure 6 , on constate qu'il existe trois voies d'acquisition $G_{acq\,i}$ i de 1 à 3, distinctes entre elles et différentes aussi de la voie de calibration $G_{acq\,4}$. On montre ci après que la configuration de la figure 7 résout complètement le problème posé. Les différentes équations disponibles sont les suivantes :

➢ calibration :

- commutateur 55 , mesures (1), (2), (3), (4) :

$$V^{(4)}_{ENcal} = \frac{R_E}{R_{cal}} G_{acq4} V_{cal} \tag{l}$$

$$V^{(i)}_{ENcal} = \frac{R_{Mi}}{R_{cal}} G_{acq4} V_{cal} \quad \text{pour i} = 1 \text{ à } 3 \tag{m}$$

On en déduit :

$$\frac{R_{Mi}}{R_{\dot{E}}} = \frac{V^{i}_{ENcal}}{V^{(4)}_{ENcal}} \quad \text{pour} \quad \omega = \omega_{cal}$$

- mesures des voies $V_{ciN}$

$$V'_{ciNcal} = G_{acqi} \frac{R_{Mi}}{R_{cal}} V_{cal} \quad \text{pour i} = 1 \text{ à } 3 \tag{n}$$

Combinant (m) et (n) on obtient :

$$\frac{G_{acqi}}{G_{acq4}} \approx \frac{V'_{ciNcal}}{V^{(i)}_{ENcal}} \quad \text{pour } \omega = \omega_{cal} \tag{o}$$

De ces expressions, on en déduit les estimations par des fonctions d'approximation dans le domaine des fréquences comme décrit précédemment pour :

$$\widehat{\frac{G_{acqi}}{G_{acq4}}} \quad \text{et} \quad \widehat{\frac{R_{Mi}}{R_E}},$$

cette dernière étant invariable en fréquence

➢ mesures :
Pour les fréquences utiles à mesurer $\omega = \omega_{uj}$, on dispose des mesures pour i de 1 à 3 :

$$V_{ciN} = G_{acqi} . R_{Mi} . T_{vi} . \frac{H_{exti}}{k_{CRi}} \tag{p}$$

$$V_{ciN} = G_{acqi} . R_{Mi} . T_{vi} . \frac{H_{ext\,i\,norm}}{k_{CRi}} . i_{Ej}$$

$$V_{ciN} = \frac{G_{acq\ i}}{G_{acq4}} \cdot \frac{R_{Mi}}{R_E} \cdot T_{vi} \cdot \frac{H_{ext\ i\ norm}}{k_{CRi}} \cdot V_{ENIj}^{(4)}$$

$$H_{ext\ i\ norm} = k_{CRi} \left( \frac{G_{acq\ i}}{G_{acq4}} \cdot \frac{R_{Mi}}{R_E} \cdot T_{vi} \cdot V_{ENIj}^{(4)} \right)^{-1} V_{ciN} \qquad\qquad (q)$$

On vérifie que dans cette expression le terme entre parenthèse est entièrement déduit des calibrations , $k_{CRi}$ étant consdéré comme connu et constant. On a donc atteint le but assigné : mesure en continu et calibration de tous les paramètres de la mesure sans interruption de la mesure.

Bien entendu, les exemples de réalisation décrits ne sont nullement limitatifs de l'invention. Ainsi, on n'a pas tenu compte, dans la suite de la description, des champs perturbateurs mentionnés en relation avec la Figure 2. Il est évident que ces champs perturbateurs peuvent être éliminés par le procédé auquel il a été fait allusion, basé sur les variations en fonction de la fréquence, mais qui ne fait pas partie de la présente invention.

## Revendications

1. Procédé de mesure magnétique de la position et de l'orientation d'un objet mobile par rapport à une structure fixe, dans lequel un premier ensemble émetteur inclut au moins deux bobines ($12_1$ à $12_3$ ; $Bb_E$) orthogonales d'émission de champs magnétiques, solidaires de ladite structure fixe, qui définissent un repère de référence, et des moyens d'émission (100, $11_1$ à $11_3$, $13_1$ à $13_3$ ; $R_E$) pour injecter dans lesdites bobines des courants d'émission ($i_{E1}$ à $i_{E3}$) prédéterminés à des premièrs fréquences, dans lequel un second ensemble capteur inclut au moins deux bobines ($13$ ; $Bb_{d1}$ à $Bb_{d3}$) orthogonales de détection de champs magnétiques, solidaires dudit objet mobile, des voies de capteurs ($21$ à $25$, $Bb_{CR}$, $R_M$) à boucles d'asservissement pour produire dans des bobines de contre-réaction ($Bb_{CR1}$ à $Bb_{CR3}$) couplées auxdites bobines de détection des champs magnétiques de contre-réaction par injection de courants de mesure ($i_{c1}$ à $i_{c3}$) et une voie de calibration ($CNA_{cal}$, $Bl$, $30$) pour élaborer au moins une tension de calibration ($V_{Cal}$), et dans lequel au moins une voie d'acquisition ($28$,$Bl$,$CAN_E$ ; $Am_1$ à $Am_4$, $F_1$ à $F_4$ $Bl$, $CAN$) est prévue pour extraire des valeurs de mesure ($V'_{c1N}$ à $V'_{c3N}$, $V_{EN}$) desdites voies d'émission, desdites voies de capteurs et de ladite voie de calibration et des moyens de calcul et de traitement ($60$) estiment, à partir desdites valeurs de mesure, les champs magnétiques détectés dans le second ensemble capteur et en déduisent la position et l'orientation dudit objet mobile dans ledit repère de référence, ledit procédé étant **caractérisé en ce que** ladite tension de calibration ne comporte que des termes à au moins deux fréquences distinctes desdites premières fréquences et **en ce que** ledit procédé comprend une étape d'injection de tensions et courants de calibration dans lesdites voies du capteur pour produire des valeurs de mesure de calibration identifiées par leur fréquence, une étape d'estimation par les moyens de calcul de la fonction de transfert de chacune des voies de capteur et une étape de déduction par lesdits moyens de calcul des champs magnétiques détectés à partir desdites valeurs de mesure et de l'inverse desdites fonctions de transfert estimées.

2. Procédé selon la revendication 1, dans lequel les boucles d'asservissement des voies de capteur fournissent des tensions de sortie ($V_{c1}$, à $V_{c3}$) produisant lesdits courants de mesure et lesdits courants de mesure s'écoulent à travers des résistances de mesure ($R_{M1}$ à $R_{M3}$) pour fournir des tensions de mesure ($V'_{c1}$ à $V'_{c3}$), **caractérisé en ce que** l'on superpose la tension de calibration auxdites tensions de sortie pour la production desdits courants de mesure, et **en ce que** ladite étape d'estimation des fonctions de transfert s'effectue, à partir de la séparation des termes fréquentiels de calibration dans lesdites tensions de sortie, par approximation polynomiale pour lesdites premières fréquences.

3. Procédé selon la revendication 2, **caractérisé en ce que** l'on injecte les courants de calibration sur lesdites résistances de mesure et **en ce que** la valeur des composants variables desdites voies des capteurs est identifiée à partir de la séparation des termes fréquentiels de calibration dans les tensions de sortie et les tensions de mesure.

4. Procédé selon la revendication 3, **caractérisé en ce que** la séparation des termes fréquentiels de calibration et leur mesure s'effectue à l'aide d'une voie d'acquisition séparée ($G_{acq4}$) multiplexée dans le temps pour traiter pendant un cycle de calibration les tensions de mesure des voies de capteur, les courants d'émission, la voie de calibration et les tensions de sortie des voies de capteur.

5. Dispositif de mesure magnétique de la position et de l'orientation d'un objet mobile par rapport à une structure fixe, du type comprenant :

- un premier ensemble émetteur incluant au moins deux bobines ($12_1$ à $12_3$ ; $Bb_E$) orthogonales d'émission de champs magnétiques, solidaires de ladite structure fixe et définissant un repère de référence, et des moyens d'émission (100,$11_1$ à $11_3$, $13_1$ à $13_3$ ; $R_E$) pour injecter dans lesdites bobines des courants ($i_{E1}$ à $i_{E3}$) prédéterminés à des premières fréquences et constituer avec lesdites bobines au moins deux voies d'émission ;
- un second ensemble capteur incluant au moins deux bobines (13 ; $Bb_{d1}$ à $Bb_{d3}$) orthogonales de détection des champs magnétiques, solidaires dudit objet mobile, des moyens de mesure (21 à 25, $Bb_{CR}$, $R_M$) par boucles d'asservissement, pour produire dans des bobines de contre-réaction ($Bb_{CR1}$ à $Bb_{CR3}$) couplées auxdites bobines de détection des champs magnétiques de contre-réaction par injection de courants de mesure ($i_{c1}$ à $i_{c3}$) et pour constituer avec lesdites bobines de détection au moins deux voies de capteur, et des moyens de calibration comprenant une voie de calibration ($CNA_{cal}$, $BI$, 30) pour élaborer au moins une tension de calibration ($V_{Cal}$) à des secondes fréquences ;
- au moins une voie d'acquisition (28, $BI$, $CAN_E$ ; $Am_1$ à $Am_4$, $F_1$ à $F_4$, $BI$, $CAN$) de mesures pour extraire des valeurs de mesure ($V'_{c1N}$ à $V'_{c3N}$, $V_{EN}$) desdites voies d'émission, desdites voies de capteur et de ladite voie de calibration ; et
- des moyens de calcul et de traitement (60) pour estimer, à partir desdites valeurs de mesure, les champs magnétiques détectés dans le second ensemble capteur et en déduire la position et l'orientation dudit objet mobile dans ledit repère de référence,

**caractérisé en ce que** lesdites secondes fréquences sont distinctes desdites premières fréquences, **en ce que** lesdits moyens de calibration sont prévus pour injecter des tensions et courants de calibration dans lesdites voies de capteur pour produire des valeurs de mesure de calibration identifiées par leurs fréquences et adressées auxdits moyens de calcul par la ou lesdites voies d'acquisition et **en ce que** lesdits moyens de calcul et de traitement (60) sont prévus pour estimer la fonction de transfert de chacune des voies de capteur et déduire les champs magnétiques détectés desdites valeurs de mesure et de l'inverse desdites fonctions de transfert estimées.

6. Dispositif selon la revendication 5, **caractérisé en ce que** lesdites voies de capteur comprennent chacune une bobine de contre-réaction ($Bb_{CR1}$ à $Bb_{CR3}$) bobinée sur le même noyau magnétique que la bobine de détection associée ($Bb_{d1}$ à $Bb_{d3}$), des moyens amplificateurs correcteurs (22, 23 ; 41 à 43) pour générer à partir du signal aux bornes de la bobine de détection une tension de sortie ($V_{c1}$ à $V_{c3}$), et des moyens amplificateurs/générateurs de courant (24, $R_s$ ; 241 à 243, $R_{s1}$ à $R_{s3}$ ; $A_{21}$, à $A_{23}$) pour élaborer un courant de contre-réaction ($i_c$ ; $i_{c1}$ à $i_{c3}$) injecté dans la bobine de contre-réaction associée et une résistance ($R_{M1}$ à $R_{M3}$) de mesure du courant de contre-réaction traversée par ledit courant pour fournir une tension de mesure ($V'_{c1}$ à $V'_{c3}$), et **en ce que** lesdits moyens de calibration comprennent en outre des premiers moyens (44 à 46) d'injection de la tension de calibration sur lesdits moyens amplificateurs/générateurs de courant et des seconds moyens (31, 51 à 53) d'injection d'un courant de calibration ($i_{cal}$) proportionnel à ladite tension de calibration ($V_{cal}$) sur lesdites résistances de mesure ($R_{M1}$ à $R_{M3}$).

7. Dispositif selon la revendication 6, **caractérisé en ce que** lesdites voies d'acquisition comprennent des premières voies d'acquisition ($G_{acq1}$ à $G_{acq3}$) pour traiter en continu lesdites tensions de mesure respectivement de chaque voie de capteur, une voie d'acquisition échantillonnée ($G_{acq4}$) pour traiter en multiplex dans le temps les signaux de calibration présents dans lesdites tensions de sortie des voies de capteur, dans les tensions de mesure de ces mêmes voies et dans la somme des courants d'émission, et lesdits courants d'émission ; et des moyens de multiplexage (55, 56) pour appliquer sur l'entrée de ladite voie d'acquisition échantillonnée lesdits signaux traités par cette dernière.

## Claims

1. A method for the magnetic measurement of the position and orientation of a moving object relative to a fixed structure, wherein a first emitting assembly includes at least two orthogonal coils ($12_1$ to $12_3$ ; $Bb_E$), integral with said structure, for emitting magnetic fields which define a reference marker, and emission means (100, $11_1$ to $11_3$, $13_1$ to $13_3$; $R_E$) for injecting predetermined emission currents ($i_{E1}$ to $i_{E3}$) into said coils at first frequencies, wherein a second sensor assembly includes at least two orthogonal coils (13; $Bb_{d1}$ to $Bb_{d3}$), integral with said moving object, for detecting magnetic fields, sensor channels (21 to 25, $Bb_{CR}$, $R_M$) with feedback control loops for producing magnetic feedback fields in feedback coils ($Bb_{CR1}$ to $Bb_{CR3}$) coupled to said detection coils by injecting measuring currents ($i_{c1}$ to $i_{c3}$), and a calibration channel ($CNA_{cal}$, B1, 30) for developing at least one calibration voltage ($V_{cal}$), and wherein at least one acquisition channel (28, B1, $CAN_E$; $Am_1$ to $Am_4$, $F_1$ to $F_4$, B1, CAN) is provided for extracting measurement values ($V'_{c1N}$ to $V'_{c3N}$, $V_{EN}$) from said emission channels, said sensor channels and said calibration channel, and calculating and processing means(60) estimate, on the basis of said measurement values, the magnetic fields detected in the second sensor assembly and deduce therefrom the position and orientation of said moving object in said reference marker, said method being **characterised in that** said calibration voltage only comprises terms with at least two distinct frequencies of said first frequencies and **in that** said method comprises a step of injecting calibration voltages and currents into said channels of the sensor so as to produce calibration measurement values identified by their frequency, a step of estimating by the calculation means the transfer function of each of the sensor channels and a step of deducing by said calculation means the magnetic fields detected on the basis of said measurement values and of the inverse of said estimated transfer functions.

2. The method according to claim 1, wherein the feedback control loops of the sensor channels provide output voltages ($V_{c1}$ to $V_{c3}$) producing said measuring currents and said measuring currents flow through measuring resistors ($R_{M1}$ to $R_{M3}$) so as to provide measurement voltages ($V'_{c1}$ to $V'_{c3}$), **characterised in that** the calibration voltage is superposed onto said output voltages in order to produce said measuring currents, and **in that** said step of estimating the transfer functions is undertaken, on the basis of the separation of the calibration frequency terms in said output voltages, by polynomial approximations for said first frequencies.

3. The method according to claim 2, **characterised in that** the calibration currents are injected into said measuring resistors and **in that** the value of the variable components of said sensor channels is identified on the basis of the separation of the calibration frequency terms in the output voltages and the measurement voltages.

4. The method according to claim 3, **characterised in that** the separation of the calibration frequency terms and their measurement is undertaken using a separate acquisition channel ($G_{acq4}$) that is time division multiplexed in order to process, during a calibration cycle, the measurement voltages of the sensor channels, the emission currents, the calibration channel and the output voltages of the sensor channels.

5. A device for the magnetic measurement of the position and orientation of a moving object relative to a fixed structure, of the type comprising:

- a first emitting assembly including at least two orthogonal coils ($12_1$ to $12_3$; $Bb_E$), integral with said structure, for emitting magnetic fields which define a reference marker, and emission means (100, $11_1$ to $11_3$, $13_1$ to $13_3$; $R_E$) for injecting predetermined emission currents ($i_{E1}$ to $i_{E3}$) into said coils at first frequencies and constituting with said coils at least two emission channels;
- a second sensor assembly including at least two orthogonal coils ($Bb_{d1}$ to $Bb_{d3}$), integral with said moving object, for detecting magnetic fields, means for measuring (21 to 25, $Bb_{CR}$, $R_M$) using feedback control loops for producing magnetic feedback fields in feedback coils ($Bb_{CR1}$ to $Bb_{CR3}$) coupled to said detection coils by injecting measuring currents ($i_{c1}$ to $ic_3$) and for constituting with said detection coils at least two sensor channels, and means for calibration comprising a calibration channel ($CNA_{cal}$, B1, 30) for developing at least one calibration voltage ($V_{cal}$) with second frequencies;
- at least one measurement acquisition channel (28, B1, $CAN_E$; $Am_1$ to $Am_4$, $F_1$ to $F_4$, B1, CAN) for extracting measurement values ($V'_{c1N}$ to $V'_{c3N}$, $V_{EN}$) from said emission channels, said sensor channels and said calibration channel; and
- calculating and processing means (60) in order to estimate, on the basis of said measurement values, the magnetic fields detected in the second sensor assembly and deducing therefrom the position and orientation of said moving object in said reference marker,

**characterised in that** said second frequencies are distinct from said first frequencies, **in that** said calibration means are provided for injecting calibration voltages and currents into said channels of the sensor so as to produce calibration measurement values identified by their frequencies and addressed to said calculation means by the one or more acquisition channels, and **in that** said calculating and processing means(60) are provided in order to estimate the transfer function of each of the sensor channels and to deduce the magnetic fields detected from said measurement values and of the inverse of said estimated transfer functions.

6. The device according to claim 5, **characterised in that** said sensor channels each comprise a feedback coil ($Bb_{CR1}$ to $Bb_{CR3}$) wound around the same magnetic core as the associated detection coil ($Bb_{d1}$ to $Bb_{d3}$), amplification correction means (22, 23; 41 to 43) for generating an output voltage ($V_{c1}$ to $V_{c3}$) from the signal on the detection coil terminals, and current amplifying/generating means (24, $R_5$; 241 to 243, $R_{s1}$ to $R_{s3}$; $A_{21}$ to $A_{23}$) for developing a feedback current ($i_c$; $i_{c1}$ to $i_{c3}$) injected into the associated feedback coil and a resistor ($R_{M1}$ to $R_{M3}$) for measuring the feedback current through which said current passes so as to provide a measuring voltage ($V'_{c1}$ to $V'_{c3}$), and **in that** said calibration means further comprise first means (44 to 46) for injecting the calibration voltage into said current amplifying/generating means and second means (31, 51 to 53) for injecting a calibration current ($i_{cal}$) that is proportional to said calibration voltage ($V_{cal}$) into said measuring resistors ($R_{M1}$ to $R_{M3}$).

7. The device according to claim 6, **characterised in that** said acquisition channels comprise first acquisition channels ($G_{acq1}$ to $G_{acq3}$) for directly processing said measurement voltages of each sensor channel respectively, a sampled acquisition channel ($G_{acq4}$) for time division multiplex processing of the calibration signals present in said output voltages of the sensor channels, in the measurement voltages of the same channels and in the sum of the emission currents, and said emission currents; and means of multiplexing (55, 56) for applying to the input of said sampled acquisition channel said signals processed by the latter.

**Patentansprüche**

1. Verfahren zum magnetischen Messen der Lage und Orientierung eines beweglichen Objekts relativ zu einer festen Struktur, wobei eine erste Senderbaugruppe wenigstens zwei mit der festen Struktur einstückige orthogonale Spulen ($12_1$ bis $12_3$; $Bb_E$) zum Senden von Magnetfeldern, die eine Referenzmarkierung definieren, und Sendemittel (100, $11_1$ bis $11_3$, $13_1$ bis $13_3$; $R_E$) zum Injizieren von vorbestimmten Sendeströmen ($i_{E1}$ bis $i_{E3}$) in die Spulen auf ersten Frequenzen beinhaltet, wobei eine zweite Sensorbaugruppe wenigstens zwei mit dem beweglichen Objekt einstückige orthogonale Spulen (13; $Bb_{d1}$ bis $Bb_{d3}$) zum Erkennen von Magnetfeldern, Sensorkanäle (21 bis 25, $Bb_{CR}$, $R_M$) mit Regelschleifen zum Erzeugen von Feedback-Magnetfeldern in den mit den Erkennungsspulen gekoppelten Feedback-Spulen ($Bb_{CR1}$ bis $Bb_{CR3}$) durch Injizieren von Messströmen ($i_{ci}$ bis $i_{c3}$) und einen Kalibrationskanal ($CNA_{cal}$, Bl, 30) zum Entwickeln von wenigstens einer Kalibrationsspannung ($V_{Cal}$) beinhaltet, und wobei wenigstens ein Erfassungskanal (28, Bl, $CAN_E$; $Am_1$ bis $Am_4$, $F_1$ bis $F_4$, Bl, CAN) zum Extrahieren von Messwerten ($V'_{cIN}$ bis $V'_{c3N}$, $V_{EN}$) von den Sendekanälen, den Sensorkanälen und dem Kalibrationskanal vorgesehen ist, und wobei Rechen- und Verarbeitungsmittel (60) anhand der Messwerte die in der zweiten Sensorgruppe erkannten Magnetfelder schätzen und davon die Lage und Orientierung des beweglichen Objekts in der Referenzmarkierung ableiten, wobei das Verfahren **dadurch gekennzeichnet ist, dass** die Kalibrationsspannung nur Terme mit wenigstens zwei getrennten Frequenzen der ersten Frequenzen aufweist, und dadurch, dass das Verfahren einen Schritt zum Injizieren von Kalibrationsspannungen und -strömen in die Kanäle des Sensors, um anhand ihrer Frequenz identifizierte Kalibrationsmesswerte zu erzeugen, einen Schritt zum Schätzen, mit den Rechenmitteln, der Transferfunktion jedes der Sensorkanäle, und einen Schritt des Ableitens, durch die Rechenmittel, der erkannten Magnetfelder anhand der Messwerte und der Umkehr der geschätzten Transferfunktionen beinhaltet.

2. Verfahren nach Anspruch 1, bei dem die Regelschleifen der Sensorkanäle Ausgangsspannungen ($V_{c1}$ bis $V_{c3}$) erzeugen, die die Messströme erzeugen, und die Messströme durch Messwiderstände ($R_{M1}$ bis $R_{M3}$) fließen, um Messspannungen ($V'_{c1}$ bis $V'_{c3}$) zu erzeugen, **dadurch gekennzeichnet, dass** die Kalibrationsspannung auf die Ausgangsspannungen überlagert wird, um die Messströme zu erzeugen, und dadurch, dass der Schritt des Schätzens der Transferfunktionen auf der Basis der Trennung der Kalibrationsfrequenzterme in den Ausgangsspannungen durch Polynom-Annäherung für die ersten Frequenzen erfolgt.

3. Verfahren nach Anspruch 2, **dadurch gekennzeichnet, dass** die Kalibrationsströme auf die Messwiderstände injiziert werden, und dadurch, dass der Wert der variablen Komponenten der Sensorkanäle anhand der Trennung der Kalibrationsfrequenzterme in den Ausgangsspannungen und den Messspannungen identifiziert wird.

4. Verfahren nach Anspruch 3, **dadurch gekennzeichnet, dass** die Trennung der Kalibrationsfrequenzterme und deren Messung mit Hilfe eines getrennten Erfassungskanals ($G_{acq4}$) erfolgt, zeitmultiplexiert zum Verarbeiten, während eines Kalibrationszyklus, der Messspannungen der Sensorkanäle, der Sendeströme, des Kalibrationskanals und der Ausgangsspannungen der Sensorkanäle.

5. Vorrichtung zum magnetischen Messen der Lage und Orientierung eines beweglichen Objekts relativ zu einer festen Struktur des Typs, der Folgendes umfasst:

   - eine erste Senderbaugruppe, die wenigstens zwei mit der festen Struktur einstückige orthogonale Spulen ($12_1$

*bis* 12$_3$; *Bb*$_E$) zum Senden von Magnetfeldern, die eine Referenzmarkierung definieren, und Sendemittel (100, 11$_1$ *bis* 11$_3$, 13$_1$ *bis* 13$_3$; *R*$_E$) zum Injizieren vorbestimmter Ströme (*i*$_{E1}$ *bis* *i*$_{E3}$) in die Spulen auf ersten Frequenzen und zum Bilden von wenigstens zwei Sendekanälen mit den Spulen umfasst;

- eine zweite Sensorbaugruppe, die wenigstens zwei mit dem beweglichen Objekt einstückige orthogonale Spulen (13; *Bb*$_{d1}$ *bis* *Bb*$_{d3}$) zum Erkennen von Magnetfeldern, Mittel (21 *bis* 25, *Bb*$_{CR}$, *R*$_M$) zum Messen mittels Regelschleifen, um in den mit den Erkennungsspulen gekoppelten Feedback-Spulen (*Bb*$_{CR1}$ *bis* *Bb*$_{CR3}$) Feedback-Magnetfelder durch Injizieren von Messströmen (*i*$_{c1}$ *bis* *i*$_{c3}$) zu erzeugen und um mit den Erkennungsspulen wenigstens zwei Sensorkanäle zu bilden, und Kalibrationsmittel umfasst, die einen Kalibrationskanal (*CNA*$_{cal}$, *Bl*, 30) zum Entwickeln von wenigstens einer Kalibrationsspannung (*V*$_{Cal}$) mit zweiten Frequenzen umfassen;

- wenigstens einen Messwerterfassungskanal (28, *Bl*, *CAN*$_E$; *Am*$_1$ *bis* *Am*$_4$, *F*$_1$ *bis* *F*$_4$, *Bl*, *CAN*) zum Extrahieren von Messwerten (*V'*$_{c1N}$ *bis* *V'*$_{c3N}$, *V*$_{EN}$) von den Sendekanälen, den Sensorkanälen und dem Kalibrationskanal; und

- Rechen- und Verarbeitungsmittel (60), um anhand der Messwerte die in der zweiten Sensorbaugruppe erkannten Magnetfelder zu schätzen und davon die Lage und Orientierung des beweglichen Objekts in der Referenzmarkierung abzuleiten,

**dadurch gekennzeichnet, dass** die zweiten Frequenzen von den ersten Frequenzen getrennt sind, dadurch, dass die Kalibrationsmittel zum Injizieren von Kalibrationsspannungen und -strömen in den Sensorkanälen vorgesehen sind, um Kalibrationsmesswerte zu erzeugen, die anhand ihrer Frequenzen identifiziert und über den/die Erfassungskanal/-kanäle zu den Rechenmitteln adressiert werden, und dadurch, dass die Rechen- und Verarbeitungsmittel (60) zum Schätzen der Transferfunktion jedes der Sensorkanäle und zum Ableiten der erkannten Magnetfelder von den Messwerten und von der Umkehr der geschätzten Transferfunktionen vorgesehen sind.

6. Vorrichtung nach Anspruch 5, **dadurch gekennzeichnet, dass** die Sensorkanäle jeweils Folgendes umfassen: eine Feedbackspule (*Bb*$_{CR1}$ *bis* *Bb*$_{CR3}$), die auf denselben Magnetkern gewickelt ist wie die assoziierte Erkennungsspule (*Bb*$_{d1}$ *bis* *Bb*$_{d3}$), Verstärkungs-/Korrekturmittel (22, 23; 41 *bis* 43) zum Erzeugen einer Ausgangsspannung (*V*$_{c1}$ *bis* *V*$_{c3}$) von dem Signal an den Anschlüssen der Erkennungsspule, und Stromverstärkungs-/-erzeugungsmittel (24, *R*$_s$; 241 *bis* 243, *R*$_{S1}$ *bis* *R*$_{s3}$; *A*$_{21}$ *bis* *A*$_{23}$) zum Entwickeln eines Feedbackstroms (*i*$_c$ ; *i*$_{c1}$ *bis* *i*$_{c3}$), der in die assoziiert Feedbackspule injiziert wird, und einen Widerstand (*R*$_{M1}$ *bis* *R*$_{M3}$) zum Messen des von dem Strom durchflossenen Feedbackstroms, um eine Messspannung (*V'*$_{c1}$ *bis* *V*$_{c3}$) zu erzeugen, und dadurch, dass die Kalibrationsmittel ferner erste Mittel (44 *bis* 46) zum Injizieren der Kalibrationsspannung in die Stromverstärkungs-/-erzeugungsmittel und zweite Mittel (31, 51 *bis* 53) zum Injizieren eines Kalibrationsstroms (*i*$_{cal}$) proportional zu der Kalibrationsspannung (*V*$_{cal}$) in die Messwiderstände (*R*$_{M1}$ *bis* *R*$_{M3}$) umfasst.

7. Vorrichtung nach Anspruch 6, **dadurch gekennzeichnet, dass** die Erfassungskanäle erste Erfassungskanäle (*G*$_{acq1}$ *bis* *G*$_{acq3}$) zum kontinuierlichen Verarbeiten der jeweiligen Messspannungen jedes Sensorkanals, einen abgetasteten Erfassungskanal (*G*$_{acq4}$) zum Zeitmultiplexverarbeiten der in den Ausgangsspannungen der Sensorkanäle, in den Messspannungen derselben Kanäle und in der Summe der Sendeströme vorhandenen Kalibrationssignale, und der Sendeströme; und Multiplexiermittel (55, 56) zum Anlegen, an den Eingang des abgetasteten Erfassungskanals, der mit diesem verarbeiteten Signale umfassen.

FIG.1

FIG.3

FIG.2

FIG.4

FIG.5

FIG.6

FIG.7

EP 1 601 929 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO A0179778 A